# EUROPEAN PATENT SPECIFICATION

(11) **EP 1 880 029 B1**
(45) Date of publication and mention of the grant of the patent: **04.07.2012**
(21) Application number: 06721483.3
(22) Date of filing: 11.05.2006
(51) Int. Cl.: C22B 3/06, C22B 3/08, C22B 23/00

(54) **AN IMPROVED PROCESS FOR HEAP LEACHING OF NICKELIFEROUS OXIDIC ORES**
VERBESSERTES VERFAHREN ZUR HAUFENAUSLAUGUNG VON NICKELHALTIGEN OXIDISCHEN ERZEN
PROCEDE AMELIORE DE LIXIVIATION EN TAS DE MINERAIS OXYDIQUES NICKELIFERES

(30) Priority: 13.05.2005 AU 2005902462
(43) Date of publication of application: 23.01.2008
(73) Proprietor: BHP Billiton SSM Development Pty Ltd, Perth, WA 6000 (AU)
(72) Inventor: LIU, Houyuan, Shortland, New South Wales 2307 (AU)
(74) Representative: Moy, David
(86) International application number: PCT/AU2006/000606
(87) International publication number: WO 2006/119559

(56) References cited:
- WO-A-01/75184
- WO-A-98/14623
- WO-A-2005/005671
- WO-A1-02/22897
- AU-A- 4 719 000
- GB-A- 1 510 676
- US-A- 3 720 749
- US-A1- 2002 012 621
- US-A1- 2003 075 021
- US-A1- 2004 228 783

## Description

### Field of the Invention

In general, the present invention relates to a new hydrometallurgical method of leaching nickeliferous oxidic type ores, to recover nickel and cobalt values. In particular, the present invention provides a method of extraction of nickel and cobalt from nickel and cobalt containing laterite ores by heap leaching of the ore with a leach liquor prepared from saline or hypersaline water. The process is particularly suited to nickeliferous oxidic ore deposits in arid areas, where subterranean brines are the only economic water source, or on island or coastal laterite deposits where only seawater is available.

### Background of the Invention

Nickel and cobalt containing nickeliferous oxidic ore deposits, typically laterite ores generally contain oxidic type ores, limonites, and silicate type ores, saprolites, in the same deposits. The higher nickel content saprolites tend to be commercially treated by a pyrometallurgical process involving roasting and electrical smelting techniques to produce ferro nickel. The power requirements and high iron to nickel ore ratio for the lower nickel content limonite and limonite/saprolite blends make this processing route too expensive, and these ores are normally commercially treated by a combination of pyrometallurgical and hydrometallurgical processes, such as the High Pressure Acid Leach (HPAL) process or the Caron reduction roast - ammonium carbonate leach process.

Other acid leaching techniques have been developed to exploit nickeliferous oxidic ore in the past decade apart from conventional high pressure acid leach (HPAL). For example enhanced pressure acid leach (EPAL) is described in U.S. patent 6,379,636 in the name of BHP Billiton. Atmospheric agitation leaching with iron precipitation as jarosite is described in U.S. patent 6,261,527 also in the name of BHP Billiton, and atmospheric agitation leaching with iron precipitation as goethite is described in Australian application 2003209829 in the name of QNI Technology. A process for direct atmospheric leaching of the saprolite component is described in U.S. patent 6,379,637 in the name of Curlook.

Heap leaching is a conventional method of economically extracting metals from low grade ores and has been successfully used to recover materials such as copper, gold, uranium and silver. Generally it involves piling raw ore directly from ore deposits into heaps that vary in height. The leaching solution is introduced on to the top of the heap to percolate down through the heap. The effluent liquor is drained from the base of the heap and passes to a processing plant where the metal values are recovered.

Heap leaching has been proposed in recovery processes for nickel and cobalt and is described for example in U.S. patents 5,571,308 and 6,312,500, both in the name of BHP Billiton, but it has not yet been used commercially. However, it offers promise of a low capital cost process, eliminating the need for expensive and high maintenance high pressure equipment required for the HPAL process.

One problem hindering the heap leaching of nickel and cobalt containing nickeliferous oxidic ores is the substantial clay component of such ores. The type of clay content is dependent on the parent rock and the physico chemical environment of the clay formation, but most clays have a detrimental effect on the percolation of the leach solution through the ore.

US Patent. No. 5,571,308 (BHP Minerals International, Inc) describes a process for heap leaching of high magnesium containing laterite ore such as saprolite. The patent points out that the clay type saprolite exhibits poor permeability, and as a solution to this, pelletisation of the ore is necessary to ensure distribution of the leach solution through the heap.

US patent no 6,312,500 (BHP Minerals International, Inc) also describes a process for heap leaching of laterites to recover nickel, which is particularly effective for ores that have a significant clay component (greater than 10% by weight). The process includes sizing of the ore where necessary forming pellets by contacting the ore with a lixivant, and agglomerating. The pellets are formed into a heap and leached with sulfuric acid to extract the metal values. Sulfuric acid fortified seawater may be used as the leach solution

Both the above patents identify the need to pelletise the whole ore feed to improve the permeability of the heap necessary for successful heap leaching.

WO 2005/005671 (Miller et al.) describes a heap leach process where the ore fraction is separated into its beneficiated upgraded ore fraction and its coarse siliceous low grade rejects fraction. Miller describes a process where acidified underground brine may be used in heap leaching the low grade rejects fraction, but does not disclose the use of an acidified hypersaline water to carry out the heap leach process.

US 2004/00228783 (Harris et al.) describes a hydrochloric acid digest carried out in a high ionic strength chloride medium. The high strength chloride medium is to regenerate the hydrochloric acid used. The process described is carried out in open vessels at elevated temperature in an atmospheric or pressure leach process using supplemented hydrochloric acid as the lixiviant.

US 2003/075021 (Young et al.) described an atmospheric process carried out at elevated temperatures together with alkali metal salts. GB 1510676, AU 47190/00 and WO 98/14623 are further examples of saline assisted leach processes that are carried out under either atmospheric or pressure leach conditions so as to effect leach of laterite ores.

WO 2001/175184 (BHP Minerals International, Inc.) describes a process for heap leaching ore to recover nickel, being particularly effective for ores with a tangible clay component. The process includes sizing the ore, forming pellets by contacting ore with a concentrated sulfuric acid lixiviant and agglomerating The pellets are formed into a heap and leached with a sulfuric acid solution to extract the metal values, including nickel. The leachate may be subjected to a nickel recovery operation without the need for intermediate neutralization

Hydrometallurgical processes, by their mature, require large quantities of water. In many areas of the world where nickeliferous oxidic ore deposits occur, good quality water is in short supply, and a costly resource. In the arid regions of Australia for example, only hypersaline underground water is available in significant quantities, and in Indonesia and the Philippines, where laterites occur on small islands, only seawater is available in any significant quantity.

Hypersaline water has been used in the high pressure acid leach process in two plants in Australia, but with reported penalties in terms of lower nickel recovery, increased acid use, and higher capital and maintenance cost of leaching equipment because of the complex metallurgy required to withstand the high chloride solution conditions.

The above discussion of documents, articles and the like is included in the specification solely for the purpose of providing a context for the present invention. It is not suggested or represented that any or all of these matters formed part of the prior art base or were common general knowledge in the field relevant to the present invention as it existed in Australia before the priority date.

The present invention aims to overcome or at least alleviate one or more of the difficulties associated with the prior art.

### Summary of the Invention

It has been surprisingly found that a leach solution including acid supplemented saline and hypersaline water can be satisfactorily used for heap leaching of nickeliferous oxidic ores, in particular laterites, for recovery of nickel and cobalt. This means that heap leaching, which requires very low capital cost equipment and suffers few of the complex metallurgical materials problems of the alternative high pressure or atmospheric pressure acid leach processes, is a low cost alternative for processing nickeliferous oxidic ores, where hypersaline and/or saline waters other than seawater are the available waters.

Accordingly, in a first embodiment, the present invention provides a process for the recovery of nickel and cobalt from a nickeliferous oxidic ore by heap leaching, the process including the steps of:
a) forming the nickeliferous oxidic ore into one or more heaps;
b) leaching the ore heap with a leach solution that includes a sulfuric acid supplemented hypersaline water as the lixiviant, the hypersaline water being sourced from at least one of surface brine, underground brine or concentrated seawater and having a chlorine ion concentration of from 30 g/l to 120 g/l; and
c) recovering nickel and cobalt from the resultant heap leachate.

Hypersaline waters useful in the process of the invention are generally sourced from surface and/or underground brines, or in some circumstances concentrated seawater or the effluent from desalination processes. Typically water sourced from brines will have a salinity or total dissolved solids higher than that of seawater and it has surprisingly been found that hypersaline waters with a total dissolved solids concentration well in excess of that of seawater provide improved nickel and cobalt recovery in heap leach processes. Preferred concentrations of the hypersaline waters that are useful in the process have a total dissolved solids concentration of from 50-200 g/l, most preferably from 50 to 150 g/l.

The term "surface and/or underground brine" as used herein includes salinated waters found inland and excludes seawater. Generally brine will be found in underground or subterranean sources, particularly in arid regions, but may also be found in salinated inland lakes, risers or creeks. The total dissolved solids concentration found in brines useful in the process of the invention described herein will be at least 5 g/l. The salinity of water sourced from brines may however be variable, lower or higher than that of seawater and could range from a total dissolved solids concentration of from 5-200 g/l.

Predominantly, the dissolved solids found in both saline or hypersaline water from surface and underground brine sources, and indeed in seawater, is sodium chloride, but other salts such as magnesium chloride and potassium chloride are usually found in minor concentrations. Waters having a chloride ion concentration of from 30 g/l to 120 g/l are required, with a concentration of from 30 g/l to 90 g/l being most preferred.

Generally, seawater has a total solids concentration of less than 30 g/I, of which about 27 g/I will be sodium chloride salts with a chloride ion concentration of about 16.4 g/I. The term "hypersaline" as used herein and in the claims denotes water having a salinity greater than seawater, that is a water having a total dissolved solids content of greater than 30 g/l and/or a chloride ion concentration greater than 17 g/I.

The use of sulfuric acid fortified seawater, having a sodium chloride concentration of 27g/l is disclosed as a leach solution for leaching lateritic ore heaps in U.S. patent 6,312,500 (BHP Minerals International Inc). The inventors of the present invention have found that this process can be improved upon, or made more commercially practical, by using saline and/or hypersaline water with salinity greater than that of seawater, or from sources other than seawater, to provide improved nickel or cobalt recovery. In one embodiment, the process disclosed herein utilises seawater in processes where the salinity is greater than a total dissolved solids concentration of 30 g/I, for example the seawater may either have been concentrated or combined with other hypersaline waters such as those from surface or underground brines, to form the hypersaline solution. In yet another embodiment, effluent from desalination plants which use seawater or other saline or brackish waters as feed water may be used. Desalination plants are commonly used in arid regions, and in coastal areas where fresh water is in short supply to provide a source of fresh water. Such effluents have high salinity, generally with a total dissolved solids content in the range of from 40 to 200 g/I, and could readily be redirected for use in the leach solution in a heap leach process.

In processing the ore for heap leaching, where it has been found that agglomerating the ore is necessary to improve percolation of the leach solution, the nickeliferous oxidic ore may be crushed and agglomerated to a larger particle size or pellet form prior to forming into the one or more heaps. Agglomerating the ore will improve the permeability of the ore, particularly where the ore has high clay content. Agglomerating the ore may not however be required in all circumstances, particularly where there is low clay content associated with the ore, or the consistency of the ore is such to allow for adequate percolation of the leach solution during the heap leach stage.

The nickeliferous oxidic ore is generally lateritic, and it will be convenient to refer to it as a lateritic ore herein. The process is particularly suited to laterite deposits in arid areas, where subterranean brines are the only economic water source, or on island or coastal laterite deposits where only seawater is available. Desalination plants are often associated with such sites, as a source of freshwater, and the effluent from desalination plants could also be used as a source of hypersaline water.

Hydrofluoric acid generating fluoride containing compounds such as fluorspar may also be used in the process with the leach solution supplemented with either the saline and/or hypersaline waters. Accordingly, in yet a further embodiment of the invention, fluorspar or other fluoride containing compounds which will generate hydrofluoric acid in the acid heap leach conditions may be mixed with the ore before preparing the ore heap for leaching. Some of the nickel in the ore is associated with nontronite clays and amorphous iron-silicate gels, and the hydrofluoric acid produced by the acid reaction with the fluoride containing compound will attack the silica and silicate structures, releasing the nickel values which are tied to these. Preferably between 1% and 5% of a fluoride containing compound, most preferably fluorspar, is added to the ore during or before the agglomeration step or when the ore is being prepared in heaps. Most preferably around 1 % fluorspar is added. It has been found that with the addition of fluorspar, improved nickel recovery can be achieved.

Alternatively, if the fluoride containing compounds are water soluble, they may be added to the acid supplemented saline and/or hypersaline leach solution before applying it to the ore heap.

### Detailed Description of the Invention

The term nickeliferous oxidic ore or laterite ore as used herein, is intended to refer to the processing of the whole ore body, or as will usually be the case, a part of the laterite ore body. For example, the process is equally applicable to processing any fraction of the laterite ore body, such as the limonite or saprolite fraction individually, or together with any other fraction of the ore body.

In a preferred embodiment, the nickeliferous oxidic ore is crushed to a size, preferably less than 25mm size. Many nickeliferous oxidic ores have high clay content and have poor natural permeability. To improve the permeability, the sized ore may be agglomerated to a larger particle size or pellet form. Concentrated sulfuric acid is preferably used to agglomerate the crushed ore, which is generally achieved by converting the clay type fines to larger particles to increase permability. Gypsum formed following sulfuric acid addition will generally act to bind the ore particles into larger particles or pellet form. Any water requirements for the agglomeration process, if required, may be provided by the saline and/or hypersaline water used for the leach solution.

Agglomerating, and/or pelletising may not be necessary in all circumstances, particularly where there is low clay content associated with the ore, or where the consistency of the ore will allow for adequate percolation of the leach solution during the heap leach stage. In such circumstances, the ore can simply be placed in heaps without prior processing.

The ore, whether agglomerated or not, may be arranged into at least one heap but preferably two heaps, a primary and a secondary heap, to be operated as a counter current heap leach system. Further heaps may be arranged if appropriate.

In the preferred counter-current process, wherein at least two heaps are formed and arranged as a primary and secondary heap, the process includes the steps of:
a) adding the leach solution to the secondary heap to produce an intermediate product liquor; and
b) adding the intermediate product liquor to the primary heap to leach the primary heap in a counter current process, and producing a nickel and cobalt rich product liquor.

The intermediate product liquor is rich in nickel and cobalt with low acidity, but also contains iron and a number of other impurities. The counter current heap leach process has the advantage of lower acid consumption, and also achieves lower iron concentration and higher nickel concentration in the pregnant leaching solution and results in a cleaner product liquor of lower acidity than the single heap system.

In general, the process forms part of an overall process for the recovery of nickel and cobalt. In a preferred process, the leach solution, is supplemented by other acid streams in the associated nickel and cobalt recovery process: Preferably, the acid streams that may be used to supplement the leach solution include:
a) the nickel depleted recycled raffinate from a downstream nickel ion exchange step or solvent extraction process; and/or
b) the acidic leachate containing at least nickel, cobalt and iron from a high pressure or an atmospheric pressure acid leach process of laterites, or a combination thereof; and/or
c) the acidic leachate from the oxidative pressure leach or atmospheric pressure leach of a nickel sulfide ore or concentrate.

Suitable saline and/or hypersaline water quality will vary depending on the source of the water, and may typically, if sourced from surface or underground brines in arid regions, have a total dissolved solids concentration in the range of from 5 g/l to 200 g/l. Preferably however, hypersaline water is used having a total dissolved solids concentration of from 40 to 200 g/l. The total dissolved solids will be salts, generally comprising sodium chloride, but also other salts such as magnesium chloride or potassium chloride salts in minor concentrations. If sourced from seawater, the water may be concentrated slightly by evaporating off some of the water to prepare hypersaline water or the concentrated effluent from a desalination process may be used. Effluent from desalination plants, which may process seawater and/or other salinated and brackish waters, typically has a total dissolved solids concentration of from 40 to 200 g/l.

Most preferably the process of the present invention utilises hypersaline water having a total dissolved solids concentration of from 50 to 150 g/l. The inventors have surprisingly found that improved nickel recovery may be achieved when acid supplemented hypersaline waters within this range is used in heap leach processes. Suitably, the hypersaline water will have a chloride ion concentration of from 30 to 120 g/l, most preferably from 30 to 90 g/l. Typical potable water has less than 0.5 g/l total dissolved solids.

The nickel and cobalt may be recovered from the leachate by conventional methods such as precipitation as a sulfide, mixed hydroxide or carbonate treatment, by solvent extraction, ion exchange processes, or other known metallurgical processing routes to extract and separate the nickel and cobalt.

### Examples

### Comparative Example 1

For comparison, this example shows heap leaching with acidified sea water. Tests were carried out on an Indonesian island laterite ore. The ore composition was 30.2% iron, 8.06% magnesium, and 1.79% nickel. Samples of the ore were loaded to a height of 1.24m in 100 mm diameter clear perspex columns, and treated with sulfuric acid solution to replicate heap leaching. The feed solution for the columns was 100g/L sulfuric acid in seawater (approximately 27gpl sodium chloride) to create the saline condition. The results are indicated in Table 1 .

**Table 1. Leaching results**

| | Cumulative Extraction | | | |
|---|---|---|---|---|
| Day | Acid Feed conc. (g/l) | Ni (% Ext.) | Mg (% Ext.) | Fe (% Ext.) |
| | 100 | | | |
| 1 | 100 | 2.8 | 1.5 | 0.0 |
| 2 | 100 | 6.8 | 4.0 | 0.1 |
| 3 | 100 | 10.8 | 8.1 | 0.4 |
| 4 | 100 | 14.3 | 12.7 | 1.1 |
| 5 | 100 | 23.3 | 26.7 | 3.1 |
| 6 | 100 | 26.4 | 32.1 | 4.1 |
| 7 | 100 | 29.1 | 36.5 | 5.2 |
| 8 | 100 | 31.8 | 41.0 | 6.3 |
| 9 | 100 | 34.7 | 45.6 | 7.3 |
| 10 | 100 | 41.4 | 56.9 | 10.6 |
| 11 | 100 | 43.0 | 59.7 | 11.6 |
| 12 | 100 | 44.2 | 61.8 | 12.5 |
| 13 | 100 | 45.2 | 63.3 | 13.6 |
| 14 | 100 | 46.0 | 64.6 | 14.6 |
| 15 | 100 | 48.0 | 67.3 | 17.3 |
| 16 | 100 | 48.6 | 68.1 | 18.1 |
| 17 | 100 | 49.4 | 69.1 | 19.3 |
| 18 | 100 | 51.0 | 70.5 | 21.9 |
| 19 | 100 | 52.6 | 72.0 | 24.9 |
| 20 | 100 | 53.7 | 73.1 | 27.0 |
| 21 | 100 | 55.5 | 74.6 | 30.6 |

The relatively short time that the test operated demonstrated good nickel recovery from the heap.

### Example 2

A sample of Australian laterite ore from an arid region was crushed and screened so that the whole ore sample was less than 25 mm. The ore analysis is indicated in Table 2.

**Table 2.**

| %Al | %Ca | %Co | %Cr | %Cu | %Fe | %Mg | %Mn | %N | %Pb | %S | %Si | %Ti | %Zn |
|---|---|---|---|---|---|---|---|---|---|---|---|---|---|
| 1.72 | 0.164 | 0.093 | 0.555 | <01 | 17.1 | 3.21 | 0.275 | 1.11 | 0.017 | 0.168 | 24.6 | 0.097 | 0.021 |

Eight columns (100mm diameter X 1.86m high) containing approximately 10 kg of agglomerated ore were established to simulate heap leaching and to test both the leaching kinetics of hydrochloric and sulfuric acid systems. Several columns had fluorspar added during agglomeration.

To make up the leach solution, a synthetic hypersaline solution was prepared to simulate the underground brine in the area of the ore body. The hypersaline solution strength was 140000 ppm total dissolved solids, including 129gpl sodium chloride. Table 3 summarizes the conditions for each column.

**Table 3 Test Column Conditions**

| Column Test Number | Agglom. acid | kg acid per ton of dry ore | CaF₂ % | Feed acid | Feed acid conc. | Flux L/m²/hr |
|---|---|---|---|---|---|---|
| BCL2 | HCl | 40.1 | 0 | HCl+brine | 0.8 M | 5 |
| BLC3 | HCl+brine | 51.3 | 5 | HCl+brine | 0.8 M | 5 |
| BLC4 | HCl+brine | 48.2 | 5 | HCl+brine | 3.0 M | 5 |
| BLS2 | H₂SO₄+Brine | 50 | 0 | H₂SO₄+Brine | 40 g/l | 5 |
| | | | | | | |
| BLS3 | H₂SO₄+Brine | 50 | 5 | H₂SO₄+Brine | 40 g/l | 5 |
| BLS5 | H₂SO₄ | 50 | 5 | H₂SO₄ | 40 g/l | 5 |

The results of the tests are indicated in Table 4.

**Table 4 Extraction Data**

| Column Test number | Days of Operation | Nickel Extraction % | Cobalt Extraction % | Iron Extraction % | kg of acid per ton of ore |
|---|---|---|---|---|---|
| BCL2 | 53 | 35.33 | 31.36 | 28.5 | 198 |
| BLC3 | 36 | 38.92 | 29.05 | 22.69 | 179 |
| BLC4 | 27 | 61.65 | 92.14 | 53.25 | 413 |
| BLS2 | 79 | 64.74 | 30.89 | 45.5 | 375 |
| BLS3 | 67 | 42.33 | 25.03 | 26.24 | 274 |
| BLS5 | 18 | 14.80 | 20.13 | 7.45 | 131 |

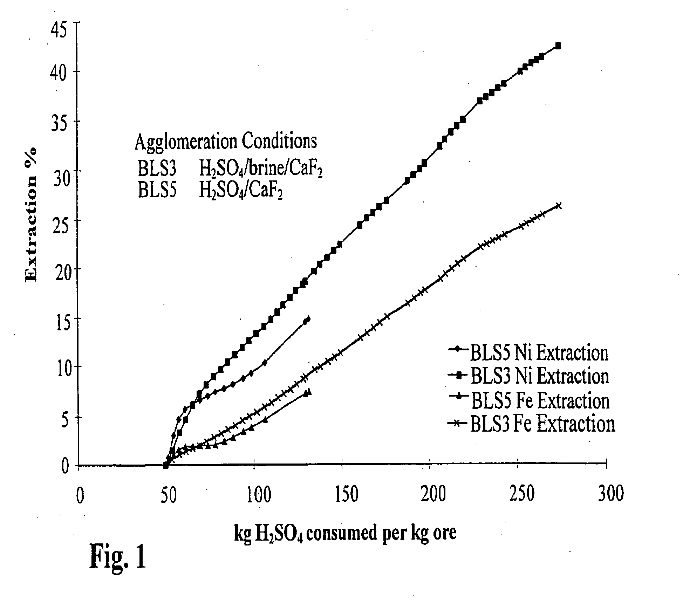

The leaching kinetics for hydrochloric acid were clearly better than for sulfuric acid. Figure 1 indicates nickel leaching was better when hypersaline water was used (test BLS3) together with sulfuric acid, than when sulfuric acid only was used (test BLS5). The results also show improved nickel recovery (BLC 4 and BLS2) than when seawater was used in Example 1.Error!

### Example 3

Based on test BLS2 in example 2 (the pioneer column) a pilot plant heap operation was established. The pilot plant consisted of a 762 kg charge heap leaching column (0.93m diameter x 2.48 high) and an ISEP pilot ion exchange unit filled with 30 litres of Dow 4195 ion exchange resin for the recovery of nickel and cobalt. The agglomeration conditions are outlined in Table 5. The percolation flux was 5 liters/m²/hr which corresponded to a flow rate of 80 litres per day.

**Table 5: Large scale heap agglomeration conditions**

| Dry Ore Mass (kg) | Ore Moisture % | Kg H₂SO₄/T ore | Brine (litres/T) |
|---|---|---|---|
| 762 | 27 | 54.4 | 106.5 |

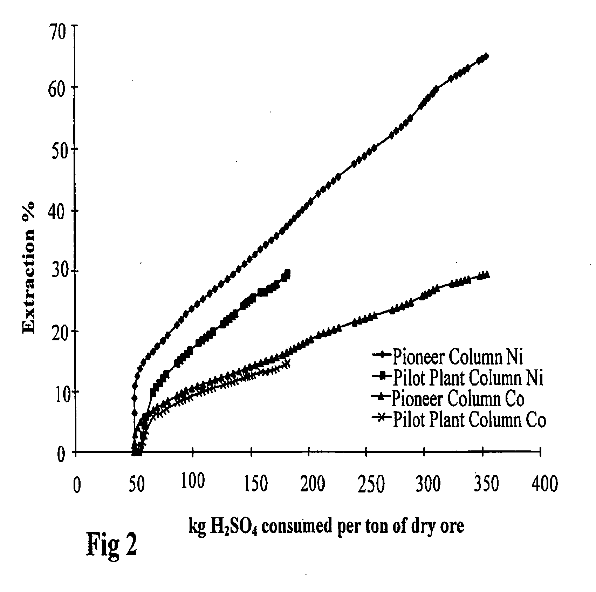

The nickel extraction for the 100mm pioneer column was 62% and 30% for cobalt over a 74 day period with the acid consumption at 366 kg/t ore. The extraction for the 762 kg pilot heap was 29.6% for nickel and 17.0% for cobalt over a 53 day period with an acid consumption of 181.8 kg/t ore. Fig.2 shows that these two columns have similar trends/kinetics for nickel and cobalt leaching. It would be expected that the pilot plant column would have approach 60% nickel extraction after three months with the acid consumption (including the acid used in agglomeration) of 350 kg/t ore. Table 6 summarizes the leaching data after 53 days of leaching

**Table 6**

| | Extraction % | | | Concentration (g/l) | | | Volume of leachate | kg/t H₂SO₄ consumed |
|---|---|---|---|---|---|---|---|---|
| | Ni | Co | Fe | Ni | Co | Fe | (litres) | |
| Average to day 53 | 29.6 | 17.0 | 14.7 | 0.65 | 0.028 | 5.62 | 4072 | 181.8 |
| Day 53 | | | | 0.40 | 0.017 | 4.95 | | |

The average concentration of nickel and cobalt in the heap leachate over a 53 day period was found to be 0.5 g/I Ni and 30 mg/l Co. As was found in the pioneer column tests, the cobalt extraction relative to the nickel extraction was found to be relatively low. This can probably be attributed mass transfer within the agglomerates, low diffusion rates on a microscopic and macroscopic scale, and channelling within the column were substantial portions are not being leached. In the mineralogical investigation cobalt was found to be associated with asbolane which may be difficult to leach with sulfuric acid. Gypsum formation during leaching may be residing in the asbolane, thus slowing the leaching kinetics of cobalt. In all examples nickel extraction continued to increase at a near linear rate.

This example demonstrates that acid supplemented saline or hypersaline water can be successfully used in heap leaching of laterites to recover nickel and cobalt.

The above description is intended to be illustrative of the preferred embodiment of the present invention. It should be understood by those skilled in the art, that many variations or alterations may be made without departing from the spirit of the invention.

## Claims

1. A process for the recovery of nickel and cobalt from a nickeliferous oxidic ore by heap leaching, the process including the steps of:
a) forming the nickeliferous oxidic ore into one or more heaps;
b) leaching the ore heap with a leach solution wherein the leach solution includes a sulfuric acid supplemented hypersaline water as the lixiviant, the hypersaline water being sourced from at least one of surface brine, underground brine or concentrated seawater and having a chloride ion concentration of from 30 g/I to 120 g/I; and
c) recovering the nickel and cobalt from the resultant heap leachate.

2. A process according to claim 1 wherein the major solids component of the hypersaline water is sodium chloride.

3. A process according to claim 1 wherein the nickeliferous oxidic ore is substantially laterite.

4. A process according to claim 1 wherein the hypersaline water has a total dissolved solids concentration of from 50 to 200 g/l.

5. A process according to claim 1 wherein the hypersaline water has a total dissolved solids concentration of from 129 g/I to 200 g/l.

6. A process according to claim 1 wherein the ore is crushed to a size of less than 25 millimetres and then agglomerated by converting clay type fines to larger size particles or pellets prior to forming the ore into the one or more heaps.

7. A process according to claim 6 wherein concentrated sulfuric acid is used to agglomerate the crushed ore.

8. A process according to claim 7 wherein the hypersaline water used for the leach solution is used for all water requirements in the agglomeration process.

9. A process according to claim 1 wherein the leach solution, is supplemented with one or more acid streams, from sources associated with the nickel and cobalt recovery process.

10. A process according to claim 9 wherein the acid streams include:
a) the nickel depleted recycled raffinate from a downstream nickel ion exchange step or solvent extraction process, and/or
b) the acidic leachate containing at least nickel, cobalt and iron from a high pressure or an atmospheric pressure acid leach process of nickeliferous oxidic ores, or a combination thereof; and/or
c) the acidic leachate from the oxidative pressure leach or atmospheric pressure leach of a nickel sulfide ore or concentrate.

11. A process according to claim 1 wherein at least two heaps are formed and arranged as a primary and secondary heap, the process including the steps of:
a) adding the leach solution to the secondary heap to produce an intermediate product liquor; and
b) adding the intermediate product liquor to the primary heap to leach the primary heap in a counter current process, and producing a nickel and cobalt rich product liquor.

12. A process according to claim 11 wherein when the secondary heap is depleted of nickel, it is discarded and the primary heap becomes the secondary heap, and a new ore heap is formed and becomes the primary heap.

13. A process according to claim 1 wherein a hydrofluoric acid generating fluoride containing compound is mixed with the ore before preparing the ore heap for leaching or added to the leach solution before applying the leach solution to the ore heap.

14. A process according to claim 13 wherein the fluoride containing compound is added to the ore during or before the agglomeration step, or where the ore is arranged into one or more heaps.

15. A process according to claim 13 wherein the fluoride containing compound is added in an amount of from 1% to 5% by weight of the total ore content.

16. A process according to claim 13 wherein the fluoride containing compound is fluorspar.

17. A process according to claim 16 wherein around 1% to 5% by weight of the total ore content of fluorspar is added to the ore during or before the agglomeration step.

18. A process according to claim 1 wherein the nickel and cobalt are recovered from the leachate by precipitation as a sulfide, hydroxide or carbonate; or by solvent extraction or ion exchange processes.

## Patentansprüche

1. Verfahren zur Gewinnung von Nickel und Kobalt aus einem nickelhaltigen oxidischen Erz durch Haufenauslaugung, wobei Verfahren die folgenden Schritte aufweist:
a) Formen des nickelhaltigen oxidischen Erzes zu einem oder mehreren Haufen;
b) Auslaugen des Erzhaufens mit einer Laugungslösung, wobei die Laugungslösung ein mit Schwefelsäure ergänztes übersalziges Wasser als das Laugungsmittel enthält, wobei das übersalzige Wasser aus einer Oberflächensole oder unterirdischen Sole oder konzentriertem Seewasser bezogen wird und eine Chloridionenkonzentration von 30 g/l bis 120 g/l aufweist und
c) Gewinnen des Nickels und des Kobalts aus dem resultierenden Haufenauszug.

2. Verfahren nach Anspruch 1, wobei die Hauptfeststoffkomponente des übersalzigen Wassers Natriumchlorid ist.

3. Verfahren nach Anspruch 1, wobei das nickelhaltige oxidische Erz im Wesentlichen Laterit ist.

4. Verfahren nach Anspruch 1, wobei das übersalzige Wasser eine gelöste Gesamtfeststoffkonzentration von 50 bis 200 g/l aufweiset.

5. Verfahren nach Anspruch 1, wobei das übersalzige Wasser eine gelöste Gesamtfeststoffkonzentration von 129 g/l bis 200 g/l aufweist.

6. Verfahren nach Anspruch 1, wobei das Erz vor dem Formen des Erzes zu dem einen oder den mehreren Haufen auf eine Größe von weniger als 25 Millimeter zerkleinert und dann durch Umwandern von tonartigem Feinmaterial zu größeren Teilchen oder Pellets agglomeriert wird.

7. Verfahren nach Anspruch 6, wobei konzentrierte Schwefelsäure verwendet wird, um das zerkleinerte Erz zu agglomerieren.

8. Verfahren nach Anspruch 7, wobei das für die Laugungslösung verwendete übersalzige Wasser für alle Wasseranforderungen im Agglomerationsverfahren verwendet wird.

9. Verfahren nach Anspruch 1, wobei die Laugungslösung, mit einen oder mehrere Säureströmen aus Quellen ergänzt wird, die mit dem Nickel- und Kobaltgewinnungsverfahren verbunden sind.

10. Verfahren nach Anspruch 9, wobei die Säureströme Folgendes umfassen:
a) das nickelabgereicherte wiederverwerte Raffinat aus einem nachgelagerten Nickelionentauschschritt oder Lösungsmittelextraktionsverfahren, und/oder
b) den sauren Auszug, der mindestens Nickel, Kobalt und Eisen enthält, aus einem Hochdruck- oder einem Atmosphärendruck-Säureauslaugverfahren von nickelhaltigen oxidischen Erzen oder einer Kombination davon; und/oder
c) den sauren Auszug aus der oxidativen Druckauslaugung oder Atmosphärendruckauslaugung eines Nickelsulfiderzes oder Konzentrats.

11. Verfahren nach Anspruch 1, wobei mindestens zwei Haufen als ein primärer und sekundärer Haufen gebildet und angeordnet werden, wobei das Verfahren die folgenden Schritte aufweist:
a) Hinzufügen der Laugungslösung zum sekundären Haufen, um eine Zwischenproduktflüssigkeit zu erzeugen; und
b) Hinzufügen der Zwischenproduktflüssigkeit zum primären Haufen, um den primären Haufen in einem Gegenstromverfahren auszulaugen, und Erzeugen einer nickel- und kobaltreichen Produktflüssigkeit.

12. Verfahren nach Anspruch 11, wobei, wenn der sekundäre Haufen von Nickel abgereichert ist, er verworfen wird und der primäre Haufen zum sekundären Haufen wird, und ein neuer Erzhaufen gebildet wird und zum primären Haufen wird.

13. Verfahren nach Anspruch 1, wobei eine Flusssäure, die eine fluoridhaltige Verbindung erzeugt, vor der Herstellung des Erzhaufens zum Auslaugen mit dem Erz gemischt wird oder vor der Anwendung der Laugungslösung auf den Erzhaufen zur Laugungslösung hinzugefügt wird.

14. Verfahren nach Anspruch 13, wobei zur die fluoridhaltige Verbindung dem Erz während oder vor dem Agglomerationsschritt hinzugefügt wird, oder wobei das Erz zu einem oder mehreren Haufen angeordnet wird.

15. Verfahren nach Anspruch 13, wobei die fluoridhaltige Verbindung in einer Menge von 1 Gew.-% bis 5 Gew.-% des Gesamterzgehalts hinzugefügt wird

16. Verfahren nach Anspruch 13, wobei die fluoridhaltige Verbindung Flussspat ist

17. Verfahren nach Anspruch 16, wobei etwa 1 Gew.-% bis 5 Gew.-% des Gesamterzgehalts an Flussspat dem Erz während oder vor dem Agglomerationsschritt hinzugefügt wird.

18. Verfahren nach Anspruch 1, wobei Nickel und das Kobalt aus dem Auszug durch Fällung als Sulfid, Hydroxid oder Karbonat; oder durch Lösungsmittelextraktion- oder Ionentauschverfahren gewonnen werden.

## Revendications

1. Procédé de récupération de nickel et de cobalt à partir d'un minerai d'oxyde nickélifère par lixiviation en tas, le procédé comportant les étapes consistant à :
a) mettre le minerai d'oxyde nickélifère sous la forme d'un ou plusieurs tas ;
b) lixivier le tas de minerai avec une solution de lixiviation, dans lequel la solution de lixiviation contient une eau hypersaline additionnée d'acide sulfurique en tant que lixiviant, l'eau hypersaline provenant au moins d'une saumure de surface, d'une saumure souterraine ou d'eau de mer concentrée et ayant une concentration d'ions chlorure de 30 g/l à 120 g/l ; et
c) récupérer le nickel et le cobalt dans le produit de lixiviation des tas résultants.

2. Procédé selon la revendication 1 dans lequel le principal constituant solide de l'eau hypersaline est le chlorure de sodium.

3. Procédé selon la revendication 1 dans lequel le minerai d'oxyde nickélifère est essentiellement de la latérite.

4. Procédé selon la revendication 1 dans lequel l'eau hypersaline possède une concentration totale en solides dissous de 50 à 200 g/l.

5. Procédé selon la revendication 1 dans lequel l'eau hypersaline possède une concentration totale en solides dissous de 129 g/l à 200 g/l.

6. Procédé selon la revendication 1 dans lequel le minerai est broyé à une taille inférieure à 25 millimètres, puis aggloméré par conversion des fines argileuses en particules ou pellets de plus grande taille avant de former un ou plusieurs tas du minerai.

7. Procédé selon la revendication 6 dans lequel de l'acide sulfurique concentré est utilisé pour agglomérer le minerai broyé.

8. Procédé selon la revendication 7 dans lequel l'eau hypersaline utilisée pour la solution de lixiviation est utilisée pour tous les besoins en eau dans le procédé d'agglomération.

9. Procédé selon la revendication 1 dans lequel la solution de lixiviation est additionnée d'un ou plusieurs courants d'acide, provenant de sources associées au procédé de récupération du nickel et du cobalt.

10. Procédé selon la revendication 9 dans lequel les courants d'acide comprennent :
a) le raffinat recyclé épuisé en nickel provenant d'une étape d'échange d'ions nickel ou d'un procédé d'extraction par solvant en aval, et/ou
b) le produit de lixiviation acide contenant au moins du nickel, du cobalt et du fer provenant d'un procédé de lixiviation acide haute pression ou à pression atmosphérique de minerais d'oxydes nickélifères, ou une de leurs combinaisons ; et/ou
c) le produit de lixiviation acide provenant de la lixiviation sous pression ou de la lixiviation à la pression atmosphérique par oxydation d'un minerai ou d'un concentré de sulfure de nickel.

11. Procédé selon la revendication 1 dans lequel au moins deux tas sont formés et disposés en un tas primaire et un tas secondaire, le procédé comportant les étapes consistant à :
a) ajouter la solution de lixiviation au tas secondaire pour produire une liqueur de produit intermédiaire ; et
b) ajouter la la liqueur produit intermédiaire au tas primaire pour lixivier le tas primaire dans un procédé à contre-courant, et produire une liqueur de produit riche en nickel et en cobalt.

12. Procédé selon la revendication 11 dans lequel lorsque le tas secondaire est épuisé en nickel, il est mis au rebut et le tas primaire devient le secondaire, et un nouveau tas de minerai est formé et devient le tas primaire.

13. Procédé selon la revendication 1 dans lequel un composé contenant du fluorure produisant de l'acide fluorhydrique est mélangé avec le minerai avant la préparation du tas de minerai à lixivier ou ajouté à la solution de lixiviation avant l'application de la solution de lixiviation au tas de minerai.

14. Procédé selon la revendication 13 dans lequel le composé contenant du fluorure est ajouté au minerai pendant ou avant l'étape d'agglomération, ou dans lequel le minerai dispose en un ou plusieurs tas.

15. Procédé selon la revendication 13 dans lequel le composé contenant du fluorure ajouté à raison de 1% à 5% en poids de la teneur totale en minerai.

16. Procédé selon la revendication 13 dans lequel le composé contenant du fluorure de la fluorine.

17. Procécé selon la revendication 16 dans lequel autour de 1% à 5%, en poids de la teneur totale en minerai, de fluorine est ajouté au minerai pendant ou avant l'étape d'agglomération.

18. Procédé selon la revendication 1 dans lequel le nickel et le cobalt sont récupérés dans le produit de lixiviation par précipitation sous forme de sulfure, d'hydroxyde ou de carbonate, ou par des procécés d'extraction par solvant ou d'échange d'ions.
